# EUROPEAN PATENT APPLICATION

(11) **EP 2 305 455 A1**
(43) Date of publication of application: **06.04.2011**
(21) Application number: 09765943.7
(22) Date of filing: 16.06.2009
(51) Int. Cl.: B29C 70/38

(54) **CUTTING SYSTEM FOR STRIPS**

(30) Priority: 20.06.2008 ES 200801850
(71) Applicant: Torres Martinez, Manuel, 31007 Pamplona (Navarra) (ES)
(72) Inventor: Torres Martinez, Manuel, 31007 Pamplona (Navarra) (ES)
(74) Representative: Intès, Didier Gérard André
(86) International application number: PCT/ES2009/000330
(87) International publication number: WO 2009/153370

(57) **Abstract**

The invention relates to a strip-cutting system intended for the individual cutting of strips used during application processes, comprising at least one individual cutting element having a spherical general supporting body (2) into which there is introduced a part (4) in the shape of a spherical sector, the outer curve of which matches the outer surface of the general supporting body (2). The aforementioned part (4) has a blade (3) with an arched cutting edge, which projects outwards slightly, such that by means of rotating the part (4), the blade (3) can be oriented in order to make cuts at any angle against a concave roller block (9), with cuts being made by rotating the general supporting body (2).

## Description

### Field of the Art

The present invention relates to the application of strips, for example in forming parts by means of synthetic fibers, such as glass fibers or carbon fibers, and particularly to the application of said fibers by means of narrow multiple fiber strip applicator heads, proposing a cutting system which advantageously allows performing said application.

### State of the Art

Concern for the degree of productivity of industrial processes has been a constant in recent years, and this translates into searching for more productive, reliable and automated systems in industries of any type.

In this direction, systems for forming parts with synthetic fibers, such as those that are common in the aeronautical industry and in other similar industries, present events which give rise to problems for automation, therefore affecting the yield and productivity of facilities, meaning that specific solutions are required in relation to such factors which allow faster and more effective functional processes of the systems.

Forming parts with synthetic fibers is conventionally done by means of applicator heads, which successively apply synthetic fiber strips until covering the entire surface of the part to be formed, consecutively overlaying layers of application in that manner until determining the thickness of the desired part.

For said fiber strip application, there are heads, such as those described in patent US 4,696,707, in patent EP 0333010, or in Spanish patents P9302506 and P9402102, with belong to the same applicant as the present invention, which apply a single fiber strip, which width determines the number of passes necessary to cover the entire application surface, so that if narrow strips are used, the number of necessary passes increases, and therefore so does the application process time, whereas if wide strips are used, the number of necessary passes is lower, but the waste of application material increases as a result of the necessary cuts, for example to finish the application corresponding with the edges of the part to be formed.

To mitigate this drawback so that the necessary number of application passes and the waste of material can be efficiently combined, multi-applicator heads such as those of Spanish patent P200200524, belonging to the same proprietor as the present invention, have been developed for the simultaneous and parallel application of a plurality of narrow fiber strips which are taken individually to the application area, said heads lagging behind or being in front of with relation to one another according to the application surface area that each one has to cover, whereby the necessary trimming is performed on the individual strips, resulting over all in less waste of material than in the case of a single strip having the width of the entire set of the partial strips of the aforementioned multiple application.

With said multi-applicator head system, however, there is another problem inherent to the application of multiple strips, because an efficient and precise cutting system is required to cut each of the strips individually, without the speed of the application process being affected.

### Object of the Invention

According to the present invention, a cutting system is proposed which is mainly intended for synthetic fiber strip application processes, although this application must not be considered as being limiting, whereby the problem of the individual cutting of strips which are supplied for application is solved in a practical and advantageous manner.

This cutting system object of the invention comprises at least one cutting unit formed by at least one individual cutting element consisting of a spherical general supporting body, in which there is inserted a supporting part of the blade in the shape of a spherical sector, an arched blade emerging slightly from the outer surface being transversely incorporated in said part, whereas a block in the shape of a concave roller matching the outer surface of said general supporting body is arranged in tangential contact with the spherical general supporting body, such that by means of rotating the supporting part of the blade about its axis, the blade can be oriented to make cuts at any angle against the block, which cut is made by means of rotating the general supporting body.

The supporting part of the blade meshes, by means of a pinion perpendicular to its axis, with two facing gear rings axial to the axis of rotation of the spherical general supporting body. These rings can rotate independently inside said spherical general supporting body, each of said rings being associated with a rotary drive transmission of a respective motor.

A functional assembly is thus obtained in which the passage of an individual strip can be determined between the general supporting body and the corresponding block so that, by means of rotating the general supporting body at a precise moment, with the blade in the periphery thereof, the corresponding strip is cut against the block, the cut being able to be made at different angles by means of orienting the blade with the rotation of the supporting part of the blade about its axis.

The arrangement of the independent functional mounting of each cutting element in the assembly of the system allows individually cutting each one of the application strips passing through the different individual cutting elements forming the system, the cuts made by each cutting element being controlled in terms of both the time for cutting and the angle of the cut by means of the motors driving the two independent gear rings with which the supporting part of the blade meshes, because the rotation of the supporting part of the blade is achieved by means of an offset rotation of both gear rings , allowing the orientation of the latter in order to establish the angle for the cut, whereas the general supporting body is rotated by the synchronized rotation of the two gear rings to actuate the cutting; these two actions can be determined in a combined manner or independently, first one and then the other.

Each blade is detachably mounted on the corresponding supporting part in order to sharpen or replace the blade when it is necessary, and is secured by means of a transverse cone head screw, through a hole with an also cone-shaped opening defined in the blade, such that tightening the screw drives the blade to its exact mounting position so that the cutting edge is in the precise position in the periphery of the general supporting body with which the supporting part of the blade is flush.

The general supporting body of each cutting element further has a peripheral recessed area with respect to the peripheral surface, such that during the inactivity of cutting actions, said recessed area is opposite the block of the cutting element, a free space thus being formed between the block and the general supporting body for the passage of the corresponding strip in the application processes during the inactivity of the cutting system.

Consequently, the aforementioned cutting system object of the invention therefore has truly advantageous features, and is preferred for the individual cutting of strips, for example in processes for forming parts by means of a multiple application of independent fiber strips for forming a wide application band by each pass.

### Description of the Drawings

Figure 1 shows a perspective view of a multiple strip application assembly, incorporating the cutting system of the
Figure 2 is a longitudinal section view of a cutting unit according to the system of the invention.

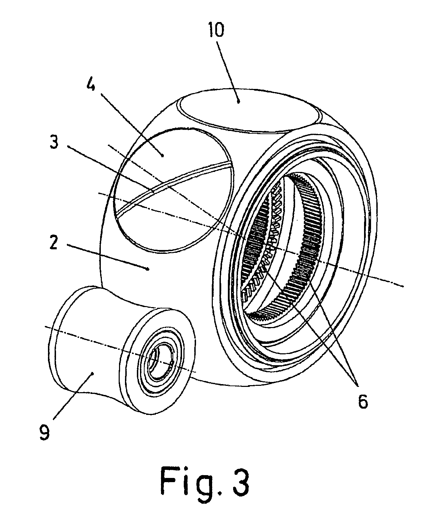

Figure 3 is a perspective view of an individual cutting element of the system.

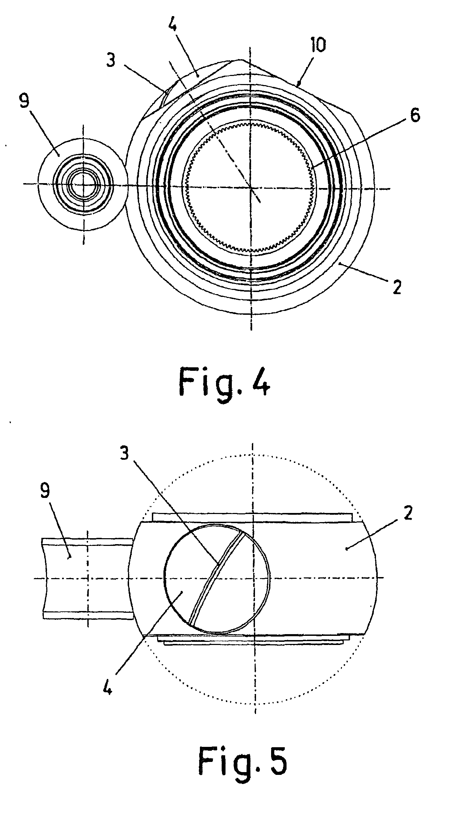

Figure 4 is a side view of the assembly of the previous figure.
Figure 5 is a plan view of the previous figure.

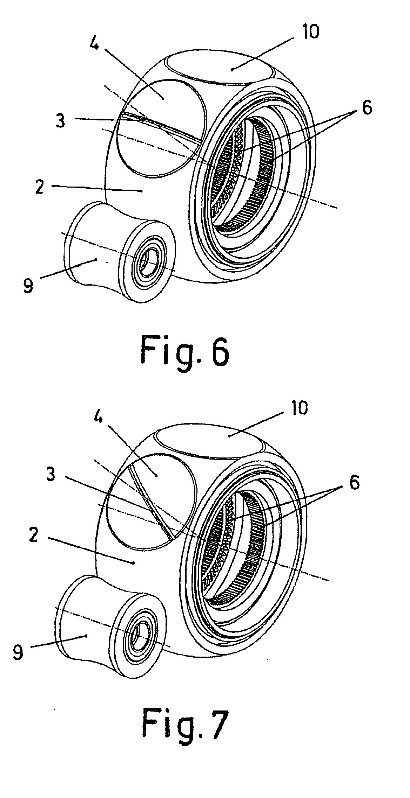

Figures 6 and 7 are respective perspective views such as that of Figure 3, with the cutting blade in other angular positions.
Figure 8 is a partial perspective view of the unit of the cutting system, with a complete individual cutting element and two others without the corresponding general supporting body and in one of them the mounting of the blade in exploded view.
Figure 9 is an enlarged detail of an individual cutting element without the corresponding general supporting body and with the mounting of the blade partially cut away.

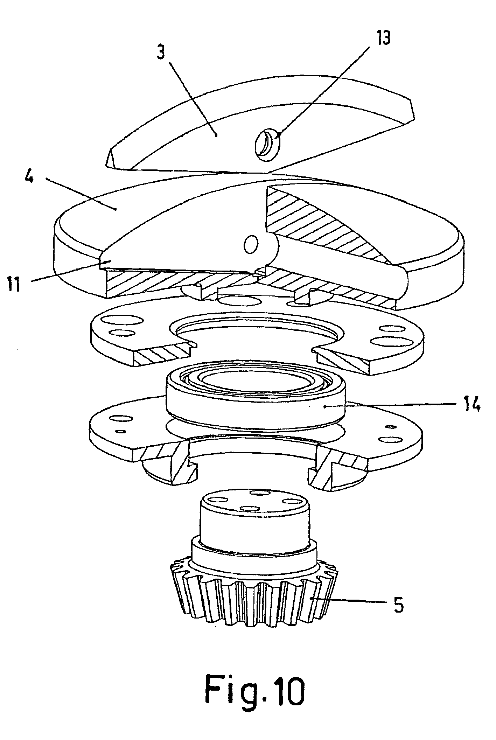

Figure 10 is an exploded perspective view of the assembly supporting the blade of an individual cutting element.
Figure 11 is a diametric section view of the assembly of the previous figure, mounted.

### Detailed Description of the Invention

The object of the invention relates to a cutting system which allows precisely and effectively making the necessary cuts in different strips, for example in a process for forming parts by means of applying a set of multiple fiber strips (1), to form a wide application band, without this use being limiting, because the system can be used for any application in which cuts in different angular positions are required on strips or bands circulating from a feed to an application area.

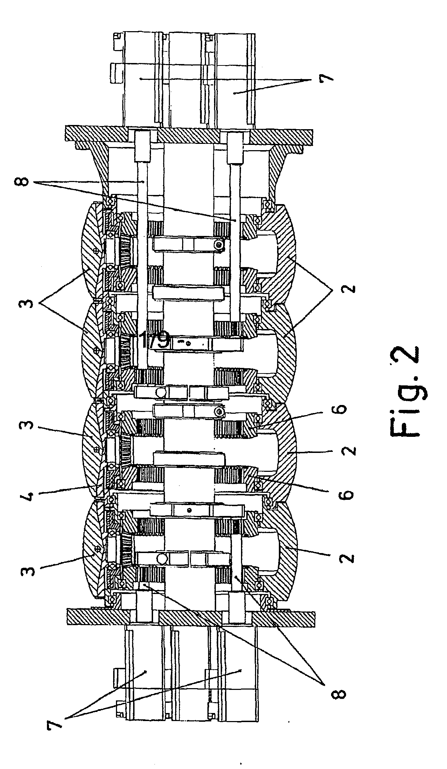

The proposed system can be established in one or more units with respect to the set of strips (1) of an application process, each cutting unit comprising at least one individual cutting element and preferably a series of individual axially consecutive cutting elements, as is observed in Figure 2.

Each individual cutting element consists of a spherical general supporting body (2), in which there is incorporated a blade (3) arranged in a supporting part (4) in the shape of a spherical sector which is housed in a peripheral cavity of the corresponding general body (2), such that said supporting part (4) of the blade (3) can be rotated in the aforementioned cavity about an axis perpendicular to an axis of rotation of the general supporting body (2).

For the purposes of structural dimensionality and material savings, the general support (2) of each of the individual cutting elements is provided in the shape of a spherical area comprised between two parallel planes equidistant from the middle plane of a theoretical sphere.

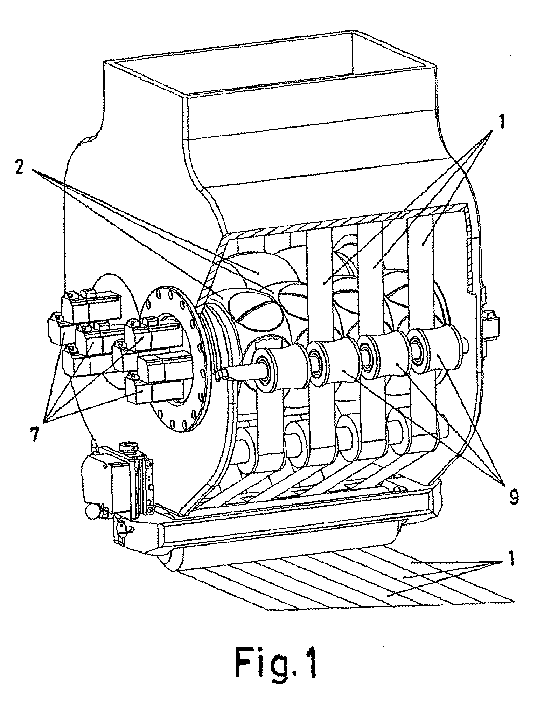

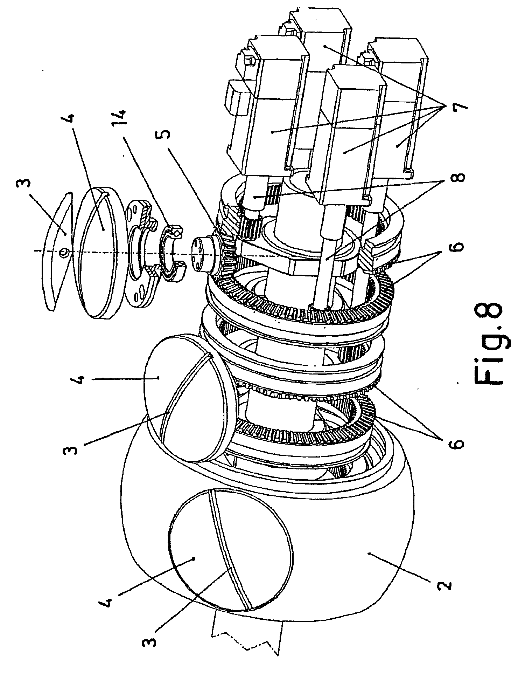

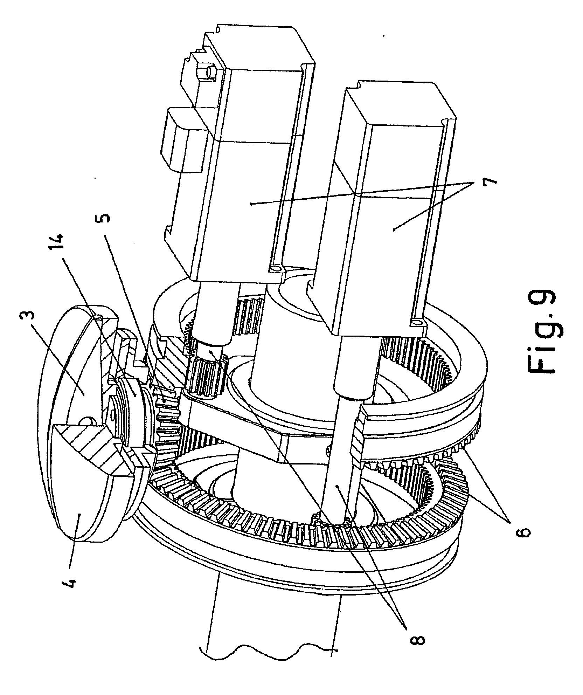

In the mounting arrangement depicted in Figures 1, 8 and 9, the supporting part (4) of the blade (3) meshes, by means of a pinion (5) perpendicular to the axis of said supporting part (4), with two facing gear rings (6) which are housed inside the general supporting body (2) and which are rotationally independent from one another about the same axis of rotation of said general supporting body (2), with individual rotation drives of said gear rings (6) by means of respective motors (7) through corresponding transmissions. By means of the synchronized rotation of the two gear rings (6) with such arrangement the corresponding general supporting body (2) rotates, whereas the supporting part (4) of the blade (3) rotates with an offset rotation of the two gear rings (6), by either one of them rotating while the other one remains stationary, or by both of them rotating at different speeds, or even in opposite directions, thereby changing the angular position of the blade (3). The blade (3) has an arched cutting edge the curve of which matches the curve of the outer surface of the supporting part (4) and that of the general supporting body (2).

Thus, by establishing the passage of, for example, the different fiber strips (1) of a multiple application process, on the different individual cutting elements of the unit of the cutting system by means of a programmed control of the operation of the drive motors (7) of the two gear rings (6) which are arranged inside the general supporting body (2) of each individual cutting element, a particularlized operation for the individual cutting of each of the fiber strips (1) can be established as needed for the application process.

In this sense, the angular position of the corresponding blade (3) in order to make the cut is determined by means of an offset rotation of the two gear rings (6) of each individual cutting element, whereas the cut is made with the synchronized rotation of both gear rings (6), being able to perform these two actions independently, first one and then the other, or in a combined manner by actuating the rotation of the two gear rings (6) with a speed offset calculated so that at the same time the general supporting body (2) rotates, the supporting part (4) of the blade (3) rotates in order to orient the blade (3) before the latter reaches the cutting point, the assembly rotating about the bearing (14).

A corresponding block (9) formed by a freely rotating roller with the periphery made of an elastomeric material, said roller block (9) having a concave generatrix matching the peripheral surface of the general supporting body (2), is arranged in each individual cutting element tangential to the general supporting body (2).

With this arrangement, during the work process the application strips (1) each pass between the general supporting body (2) and the roller block (9) of a individual cutting element, such that when the general supporting body (2) rotates, when the blade (3) thereof passes through the roller block (9), the respective strip (1) is cut with the cutting angle identical to the positioning angle of the blade (3).

The general supporting body (2) of each individual cutting element further has a peripheral recessed area (10) with respect to the peripheral surface, such that when said recessed area (10) is opposite the corresponding roller block (9) between the general supporting body (2) and the roller block (9), there is a separation through which the corresponding strip (1) can freely pass in the application processes.

Therefore, given that the cutting system only has to act at times when the application strips (1) must be cut, having to remain inactive during the rest of the application process for the free passage of the strips (1) in that inactive phase of the cutting system, the general supporting body (2) of each individual cutting element is positioned with its recessed area (10) in front of the corresponding roller block (9), as is observed in Figure 1, whereby the speed of the application process of the strips (1) is not affected by the cutting system.

During the assembly, the supporting part (4) of the blade (3) is flush with the peripheral surface of the corresponding general supporting body (2), the blades (3) being housed in a slot (11) of the respective supporting part (4), with the cutting edge emerging outwards slightly, such that said cutting edge projects slightly from the peripheral surface of the general supporting body (2).

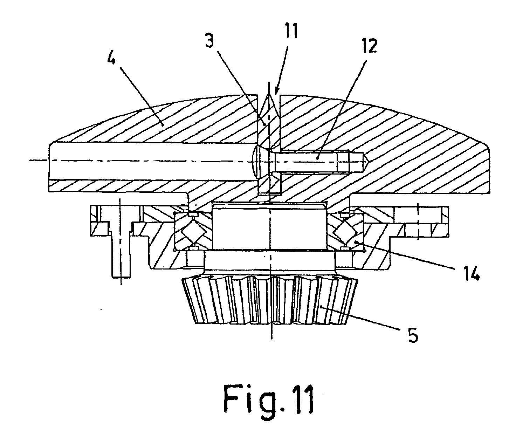

In this arrangement, each blade (3) is secured by means of a cone head screw (12), said screw (12) passing through a transverse hole (13) of the blade (3) defined with an also cone-shaped opening, whereby tightening the screw (12) drives the blade (3) to the exact mounting position in the respective supporting part (4), as is observed in Figure 11.

Moreover, the blades (3) are provided with a cutting edge arched with an outward convexity, matching the curve of the outer surface of both the general supporting body (2) and the supporting part (4) of the blade (3), and also matching the curve of the concavity of the corresponding roller block (9). The same interference is thus always kept between the blade (3) and the roller block (9) of each individual cutting element which allows making a uniform incision both in perpendicular cuts and in inclined cuts.

## Claims

1. A strip-cutting system of the type intended for the individual cutting of strips (1) used during application processes, comprising at least one unit formed by at least one individual cutting element, **characterized in that** each individual cutting element presents a spherical general supporting body (2) into which is embedded a supporting part (4) of a blade (3) with an arched cutting edge slightly protruding from the mentioned supporting part (4); said supporting part (4) of the blade (3) being in the shape of a spherical sector, with an outer surface the curve of which matches the outer surface of the general supporting body (2); whereas arranged tangential to the general supporting body (2) there is a block in the shape of a concave roller the curve of which matches that of the peripheral surface of said general supporting body (2) and that of the supporting part (4) of the blade (3), the blade (3) being orientable by means of rotating the supporting part (4) inside the general supporting body (2) so that the blade (3) can make cuts at any angle against the roller block (9), which cut is made by means of rotating the general supporting body (2) about an axis perpendicular to that of the supporting part (4) of the blade (3).

2. The strip-cutting system according to claim 1, **characterized in that** the general supporting body (2) is made up of a spherical area comprised between two parallel planes equidistant from a middle plane of a theoretical sphere; and **in that** the supporting part (4) of the blade (3) is centrally arranged in said spherical area, being flush with the peripheral surface of said spherical area.

3. The strip-cutting system according to claims 1 and 2, **characterized in that** the blade (3) has a convex outwards arched cutting edge, matching the curve of the general supporting body (2) and the curve of the generatrix of the concavity of the roller block (9), which allows determining a uniform incision both in transversely perpendicular cuts and in inclined cuts.

4. The strip-cutting system according to claims 1 and 2, **characterized in that** the supporting part (4) of the blade (3) meshes with two facing gear rings (6) which are axially arranged inside the general supporting body (2) and which can rotate independently, actuated by respective rotation transmissions by means of corresponding drive motors (7), such that by means of an offset rotation of the two gear rings (6), the supporting part (4) of the blade (3) rotates in order to orient said blade (3), whereas with the synchronized rotation of both gear rings (6) the general supporting body (2) rotates in order to make the cuts.

5. The strip-cutting system according to claims 1 and 2, **characterized in that** the blade (3) is securely mounted on its supporting part (4) by means of a cone head screw (12), said screw (12) passing through a hole (13) of the blade (3) defined with an also cone-shaped opening, such that tightening the screw (12) drives the blade (3) to its exact mounting position.

6. The strip-cutting system according to claims 1 and 2, **characterized in that** the general supporting body (2) has a peripheral recessed area (10) with respect to the peripheral surface, such that in said recessed area (10), opposite the roller block (9), there is a separation between the general supporting body (2) and the roller block (9) which allows the free passage of the corresponding strip (1) during the application processes.

7. The strip-cutting system according to claim 1, **characterized in that** both the feed and the cutting can be done continuously or alternately.
